# EUROPÄISCHE PATENTANMELDUNG

(11) **EP 2 270 943 A2**
(43) Veröffentlichungstag der Anmeldung: **05.01.2011**
(21) Anmeldenummer: 10450108.5
(22) Anmeldetag: 25.06.2010
(51) Int. Cl.: H02G 3/32, F16B 21/02

(54) **Verfahren zum Festlegen eines Befestigungselements sowie Befestigungselement für ein rohrartiges Element**

(30) Priorität: 01.07.2009 AT 41009 U
(71) Anmelder: Schnabl Stecktechnik GmbH, 3100 St. Pölten (AT)
(72) Erfinder: Bruckbauer, Wolfgang, 4893 Zell am Moos (AT)
(74) Vertreter: Miksovsky, Alexander

(57) **Zusammenfassung**

Bei einem Verfahren zum Festlegen eines Befestigungselements für ein rohrartiges Element, insbesondere für ein Rohr, eine Leitung oder dgl. an einer mit wenigstens einer Durchbrechung (2), insbesondere einem Langloch ausgebildeten Aufnahme (1), beispielsweise einer Kabeltasse sind die folgenden Schritte vorgesehen:
- Bereitstellen eines Befestigungselements, welches mit einem Fußelement (5) versehen wird, welchem ein Durchtritt durch die Durchbrechung (2) ermöglicht wird, wobei das eine bevorzugte Längserstreckungsrichtung aufweisende Fußelement (5) an dem Befestigungselement oder an einem mit diesem koppelbaren Zwischenstück (4) beabstandet von einer Auflagefläche des Befestigungselements oder Zwischenstücks (4) an der Aufnahme (1) ausgebildet wird,
- Einsetzen des Fußelements (5) in der Durchbrechung (2) der Aufnahme (1), und
- Verdrehen bzw. Verschwenken des Befestigungselements nach Durchtritt des Fußelements (5) durch die Durchbrechung in eine Lage, in welcher das Fußelement (5) Rand- bzw. Begrenzungsbereiche (6, 7) der Durchbrechung (2) übergreift, wobei das Befestigungselement (12, 14, 16, 18) oder Zwischenstück (4) mit dem eingesetzten Fußelement (5) in der Durchbrechung (2) verstellbar bzw. verschiebbar angeordnet wird.

Darüber hinaus wird ein derartiges Befestigungselement für ein rohrartiges Element zur Verfügung gestellt.

## Beschreibung

Die vorliegende Erfindung bezieht sich auf ein Verfahren zum Festlegen eines Befestigungselements für ein rohrartiges Element, insbesondere für ein Rohr, eine Leitung oder dgl. an einer mit wenigstens einer Durchbrechung, insbesondere einem Langloch ausgebildeten Aufnahme, beispielsweise einer Kabeltasse, umfassend die folgenden Schritte:
- Bereitstellen eines Befestigungselements, welches mit einem Fußelement versehen wird, welchem ein Durchtritt durch die Durchbrechung ermöglicht wird, wobei das eine bevorzugte Längserstreckungsrichtung aufweisende Fußelement an dem Befestigungselement oder an einem mit diesem koppelbaren Zwischenstück beabstandet von einer Auflagefläche des Befestigungselements oder Zwischenstücks an der Aufnahme ausgebildet wird,
- Einsetzen des Fußelements in der Durchbrechung der Aufnahme, und
- Verdrehen bzw. Verschwenken des Befestigungselements oder Zwischenstücks nach Durchtritt des Fußelements durch die Durchbrechung in eine Lage, in welcher das Fußelement Rand- bzw. Begrenzungsbereiche der Durchbrechung übergreift.

Die vorliegende Erfindung bezieht sich darüber hinaus auf ein Befestigungselement für ein rohrartiges Element, insbesondere für ein Rohr, eine Leitung oder dgl., zur Festlegung an einer mit wenigstens einer Durchbrechung, insbesondere einem Langloch ausgebildeten Aufnahme, beispielsweise einer Kabeltasse, wobei das Befestigungselement oder ein damit koppelbares Zwischenstück mit einem Fußelement versehen ist, welchem ein Durchtritt durch die Durchbrechung ermöglicht ist, wobei das eine bevorzugte Längserstreckungsrichtung aufweisende Fußelement an dem Befestigungselement oder an einem mit diesem koppelbaren Zwischenstück beabstandet von einer Auflagefläche des Befestigungselements oder Zwischenstücks an der Aufnahme ausgebildet ist und nach einem Durchtritt durch die Durchbrechung für ein Zusammenwirken mit Rand- bzw. Kantenbereichen der Durchbrechung gemeinsam mit dem Befestigungselement oder Zwischenstück verdrehbar bzw. verschwenkbar ist.

Für ein Festlegen eines Befestigungselements für ein rohrartiges Element, insbesondere für ein Rohr, eine Leitung oder dgl., wobei ein derartiges Rohr beispielsweise auch von einem Kunststoffrohr zur Aufnahme von elektrischen Leitungen gebildet sein kann, gibt es oft Probleme im Zusammenhang mit einer Festlegung eines derartigen Befestigungselements beispielsweise an Gebäudeteilen. Im Zusammenhang mit einer Nachrüstung von bestehenden Anlagen ist es oftmals erforderlich, beispielsweise zusätzliche Rohre bzw. Leitungen für Zusatzaggregate zu verlegen. Für ein Verlegen von Leitungen finden beispielsweise Kabeltassen oder ähnliche Vorrichtungen Verwendung, in welchen für bestehende Aggregate bzw. Anlagen oftmals eine überaus große Anzahl von Leitungen bereits verlegt worden ist. Für ein Nachrüsten derartiger bestehender Anlagen oder für einen Einsatz von zusätzlichen Anlagen wäre es somit erforderlich, beispielsweise in bestehende Kabeltassen zusätzliche Leitungen aufzunehmen, wobei eine zusätzliche Aufnahme von Leitungen in derartigen bereits bestehenden Kabeltassen zumeist überaus schwierig und aufwendig ist. Es wird daher beispielsweise versucht, im Bereich von insbesondere bereits in Kabeltassen verlegten Leitungen bzw. Rohren oder Kabeln zusätzliche Leitungen durch Festlegung von Halterungen für derartige zusätzliche Leitungen oder Rohre zu verlegen. Ein Einsatz von üblichen, beispielsweise mit Dübeln oder ähnlichen Vorrichtungen festlegbaren Befestigungselementen insbesondere bei Verlegung von zusätzlichen Rohren oder Leitungen bei bereits bestehenden Kabeltassen oder ähnlichen Vorrichtungen ist jedoch nicht bzw. nicht ohne weiteres möglich. Derartige Kabeltassen bzw. allgemein Lochwände oder ähnliche Vorrichtungen, welche beispielsweise zur Verkleidung herangezogen werden, weisen üblicherweise eine Vielzahl von Löchern bzw. Durchbrechungen, insbesondere Langlöchern auf, welche beispielsweise in Längsrichtung oder normal von derartigen Aufnahmen, beispielsweise Kabeltassen verlaufen.

Ein Verfahren sowie Befestigungselement der eingangs genannten Art sind beispielsweise der WO 2003/064867, der US 2003/0213876 oder der US-B 6 209 827 zu entnehmen. Nachteilig bei diesen bekannten Ausbildungen ist ihr komplizierter Aufbau sowie insbesondere die Tatsache, daß ein Einsatz nur mit speziell auf die Ausbildung und Kontur insbesondere des Fußelements abgestimmten Aufnahmen möglich ist, sodaß für unterschiedliche Aufnahmen jeweils speziell darauf abgestimmte und in der Aufnahme nicht verstellbare bzw. einstellbare Befestigungselemente verwendet werden müssen.

Die vorliegende Erfindung zielt daher darauf ab, ein Verfahren sowie ein Befestigungselement der eingangs genannten Art dahingehend weiterzubilden, daß die oben genannten Probleme des Standes der Technik vermieden bzw. zumindest reduziert werden und daß eine rasche und sichere Festlegung eines derartigen Befestigungselements an einer mit wenigstens einer Durchbrechung versehenen bzw. ausgebildeten Aufnahme, insbesondere einer Kabeltasse möglich wird. Hiebei wird darüber hinaus darauf abgezielt, für die Befestigungselemente zur Aufnahme rohrartiger Elemente, wie beispielsweise Leitungen oder Rohre, nach Möglichkeit bekannte Aufnahmeelemente oder Schellen zu verwenden, um insbesondere auch eine Kompatibilität mit bekannten Befestigungselementen und eine Einstellbarkeit bzw. Verschiebbarkeit der Befestigungselemente bei der Positionierung bzw. Anordnung zur Verfügung zu stellen.

Zur Lösung dieser Aufgaben ist ein Verfahren der eingangs genannten Art im wesentlichen **dadurch gekennzeichnet, daß** das Befestigungselement oder Zwischenstück mit dem eingesetzten Fußelement in der Durchbrechung verstellbar bzw. verschiebbar angeordnet wird.

Durch ein Bereitstellen eines Befestigungselements mit einem Fußelement, welchem ein Durchtritt durch die Durchbrechung ermöglicht wird, gelingt in einfacher und rascher Weise eine Anordnung bzw. Festlegung eines derartigen Befestigungselements an der Aufnahme, beispielsweise Kabeltasse, welche mit wenigstens einer Durchbrechung ausgebildet ist. Durch ein Einsetzen des Fußelements in der Durchbrechung und ein nachfolgendes Verdrehen bzw. Verschwenken des Befestigungselements nach einem Durchtritt des Fußelements durch die Durchbrechung, insbesondere ein Langloch, gelingt durch ein einfaches Übergreifen von Rand- bzw. Begrenzungsbereichen der Durchbrechung eine unmittelbare und sichere Festlegung des Befestigungselements an der Aufnahme. Nach Anordnung bzw. Festlegung einer üblicherweise Vielzahl von voneinander beabstandeten Befestigungselementen kann an einer derartigen Aufnahme in an sich bekannter Weise eine Leitung bzw. ein Rohr verlegt werden, so daß mit einfachen Mitteln und insbesondere raschen und einfachen Verfahrensschritten insbesondere zusätzliche rohrartige Elemente oder Leitungen an einer bereits bestehenden Aufnahme, beispielsweise einer Kabeltasse festgelegt werden können. Eine weitere Einstellbarkeit einer Positionierung bzw. Verstellbarkeit des an der Aufnahme festzulegenden Befestigungselements wird erfindungsgemäß dadurch erzielt, daß das Befestigungselement oder Zwischenstück mit dem eingesetzten Fußelement in der Durchbrechung verstellbar bzw. verschiebbar angeordnet wird. Insbesondere bei Vorliegen eines Langlochs gelingt ein einfaches Positionieren durch ein Verschieben des Befestigungselements entlang des Langlochs.

Für eine ordnungsgemäße und sichere Festlegung des Befestigungselements an der Aufnahme nach dem Durchtritt des Fußelements durch die wenigstens eine Durchbrechung wird gemäß einer bevorzugten Ausführungsform vorgeschlagen, daß der Verdrehwinkel zum Übergreifen der Rand- bzw. Begrenzungsbereiche der Durchbrechung durch das Fußelement und zur Einnahme einer Einsatzposition des Befestigungselements mit wenigstens 20°, vorzugsweise etwa 45° gewählt wird. Es ist somit erfindungsgemäß ausreichend, durch ein geringfügiges Verdrehen bzw. Verschwenken des Befestigungselements oder des Zwischenstücks mit dem daran angeordneten Fußelement eine sichere Festlegung zu erzielen.

Für eine sichere Festlegung und zur Erzielung eines im wesentlichen klemmenden Festlegens des Befestigungselements an der Aufnahme wird gemäß einer weiters bevorzugten Ausführungsform vorgeschlagen, daß der Abstand des Fußelements von einer Auflagefläche des Befestigungselements oder Zwischenstücks entsprechend der Dicke der Aufnahme im Bereich der Durchbrechung gewählt wird. Durch einen entsprechenden Abstand zwischen dem Fußelement und einer Auflagefläche des Befestigungselements oder Zwischenstücks entsprechend der Dicke der Aufnahme wird unmittelbar durch ein Verdrehen ein klemmendes Festlegen des Befestigungselements an der Aufnahme sichergestellt, so daß insbesondere auf zusätzliche Sicherungseinrichtungen verzichtet werden kann.

Für eine besonders einfache und zuverlässige Herstellung wird gemäß einer weiters bevorzugten Ausführungsform vorgeschlagen, daß in an sich bekannter Weise das Befestigungselement oder das damit koppelbare Zwischenstück mit dem daran angeordneten Fußelement aus einem Kunststoffmaterial hergestellt wird.

Zur Lösung der eingangs genannten Aufgaben ist darüber hinaus ein Befestigungselement der oben genannten Art im wesentlichen **dadurch gekennzeichnet, daß** das Befestigungselement oder Zwischenstück mit dem eingesetzten Fußelement in der Durchbrechung verstellbar bzw. verschiebbar angeordnet ist. Wie bereits oben ausgeführt, läßt sich somit ein einfach festlegbares Befestigungselement zur Festlegung bzw. Verankerung an einer bestehenden Aufnahme, welche mit wenigstens einer Durchbrechung, insbesondere einem Langloch versehen ist, zur Verfügung stellen, so daß insbesondere eine Nachrüstung von bestehenden Anlagen mit rohrartigen Elementen, beispielsweise Leitungen oder dgl. in einfacher Weise ermöglicht werden kann. Durch die erfindungsgemäß vorgeschlagene Verstellbarkeit bzw. Verschiebbarkeit wird die Einstellung der Positionierung entsprechend gegebenenfalls unterschiedlichen Gegebenheiten und unter Verwendung eines im wesentlichen gleichartigen Befestigungselements für unterschiedliche Aufnahmen möglich.

Für eine sichere Festlegung des Befestigungselements an der Aufnahme wird gemäß einer bevorzugten Ausführungsform vorgeschlagen, daß der Verdrehwinkel zum Übergreifen der Rand- bzw. Begrenzungsbereiche der Durchbrechung durch das Fußelement und zur Einnahme einer Einsatzposition des Befestigungselements mit wenigstens 20°, vorzugsweise etwa 45° gewählt ist.

Wie bereits oben ausgeführt, wird für ein insbesondere klemmendes Festlegen des Befestigungselements darüber hinaus vorgeschlagen, daß der Abstand des Fußelements von einer Auflagefläche des Befestigungselements oder Zwischenstücks entsprechend der Dicke der Aufnahme im Bereich der Durchbrechung gewählt ist, wie dies einer weiters bevorzugten Ausführungsform des erfindungsgemäßen Befestigungselements entspricht.

Für eine besonders einfache und zuverlässige Herstellung, welche auch eine günstige Flexibilität des Befestigungselements zur Verfügung stellen kann, wird gemäß einer weiters bevorzugten Ausführungsform vorgeschlagen, daß das Befestigungselement oder das damit koppelbare Zwischenstück mit dem daran angeordneten Fußelement aus einem Kunststoffmaterial hergestellt ist.

Insbesondere bei Vorsehen von Langlöchern in der Aufnahme wird für eine zuverlässige und ordnungsgemäße Festlegung des Befestigungselements gemäß einer weiters bevorzugten Ausführungsform vorgeschlagen, daß die Längserstreckung des Fußelements wenigstens das Doppelte, insbesondere wenigstens das Dreifache der Breite des Fußelements beträgt. Durch eine derartige Wahl der relativen Abmessungen des Fußelements gelingt eine zuverlässige und sichere sowie rasche Festlegung durch ein Übergreifen von Rand- bzw. Kantenbereichen der Durchbrechung.

Während ein Fußelement zur Festlegung an einer Aufnahme durch Verdrehen bzw. Verschwenken nach einem Durchtritt durch wenigstens eine Durchbrechung einer Aufnahme unmittelbar an dem Befestigungselement vorgesehen sein kann, welches darüber hinaus noch wenigstens ein Aufnahmeelement für ein Rohr bzw. eine Leitung aufweist, kann insbesondere für einen Einsatz von gegebenenfalls normierten oder standardisierten Befestigungselementen bzw. Aufnahmeelementen vorgesehen sein, daß derartige normierte bzw. standardisierte Befestigungselemente über ein Zwischenstück an der Aufnahme festgelegt werden, wobei das Zwischenstück, wie oben bereits mehrfach erwähnt, mit dem Fußelement zur Festlegung an der Aufnahme versehen ist. Für eine besonders einfache und zuverlässige Kopplung zwischen dem an gegebenenfalls unterschiedliche Ausbildungen von Durchbrechungen angepaßten Zwischenstück mit gegebenenfalls normierten oder standardisierten Befestigungselementen wird gemäß einer weiters bevorzugten Ausführungsform vorgeschlagen, daß das Zwischenstück mit hakenartigen Vorsprüngen an der vom Fußelement abgewandten Oberfläche ausgebildet ist, welche mit komplementär ausgebildeten Profilierungen im zur Aufnahme gewandten Bodenbereich des Befestigungselements für eine Festlegung des Befestigungselements an dem Zwischenstück zusammenwirken.

Für eine einfache Anordnung eines rohrartigen Elements, insbesondere einer Leitung an dem ordnungsgemäß und einfach an der Aufnahme festgelegten Befestigungselement wird darüber hinaus bevorzugt vorgeschlagen, daß ein Aufnahmeelement zur Aufnahme des rohrartigen Elements von einer das rohrartige Element wenigstens teilweise umgreifenden Schelle gebildet ist.

Für eine gleichzeitige Aufnahme bzw. Festlegung einer Mehrzahl von insbesondere parallel verlaufenden rohrartigen Elementen wird vorgeschlagen, daß eine Mehrzahl von Aufnahmeelementen im wesentlichen nebeneinander und parallel zueinander angeordnet ist, wie dies einer weiteren bevorzugten Ausführungsform des erfindungsgemäßen Befestigungselements entspricht.

Zur zusätzlichen Sicherung eines aufgenommenen rohrartigen Elements in bzw. an dem Befestigungselement wird gemäß einer weiters bevorzugten Ausführungsform vorgeschlagen, daß ein Aufnahmeelement mit einer insbesondere lösbaren Verschlußeinrichtung für das aufzunehmende rohrartige Element ausgebildet ist.

Die Erfindung wird nachfolgend anhand von in der beiliegenden Zeichnung schematisch dargestellten Ausführungsbeispielen näher erläutert. In dieser zeigen:
Fig. 1 in einer schematischen Ansicht eine Darstellung einer beispielsweise von einer Kabeltasse gebildeten Aufnahme, an welcher entsprechend dem erfindungsgemäßen Verfahren wenigstens ein erfindungsgemäßes Befestigungselement festzulegen ist;
Fig. 2 eine schematische Draufsicht auf eine Festlegung eines Zwischenstücks eines erfindungsgemäßen Befestigungselements entsprechend dem erfindungsgemäßen Verfahren, wobei Fig. 2a das Zwischenstück bei einem Durchtritt des Fußelements durch die von einem Langloch gebildete Durchbrechung zeigt und Fig. 2b die festgelegte Lage des Zwischenstücks zeigt;
Fig. 3 eine schematische Darstellung eines Zwischenstücks eines erfindungsgemäßen Befestigungselements, wobei Fig. 3a eine perspektivische Ansicht von oben und Fig. 3b eine perspektivische Ansicht von unten insbesondere auf das Fußelement zeigt;
Fig. 4 in einer schematischen Darstellung ein Befestigungselement, welches beispielsweise mit dem in Fig. 3 gezeigten Zwischenstück zu koppeln ist;
Fig. 5 eine abgewandelte Ausführungsform eines erfindungsgemäßen Befestigungselements, wobei das Aufnahmeelement ähnlich zu demjenigen der Ausbildung gemäß Fig. 4 ausgebildet ist, wobei Fig. 5a eine schematische Schrägansicht von unten insbesondere auf das Fußelement zeigt und Fig. 5b eine Seitenansicht ist;
Fig. 6 in einer zu Fig. 5 ähnlichen Darstellung eine abgewandelte Ausführungsform eines erfindungsgemäßen Befestigungselements, wobei Fig. 6a wiederum eine Ansicht schräg von unten und Fig. 6b eine Seitenansicht ist; und
Fig. 7 in einer wiederum ähnlichen Darstellung eine weitere abgewandelte Ausführungsform eines erfindungsgemäßen Befestigungselements zur Aufnahme einer Mehrzahl von rohrartigen Elementen, wobei Fig. 7a wiederum eine Ansicht schräg von unten und Fig. 7b eine Seitenansicht ist.

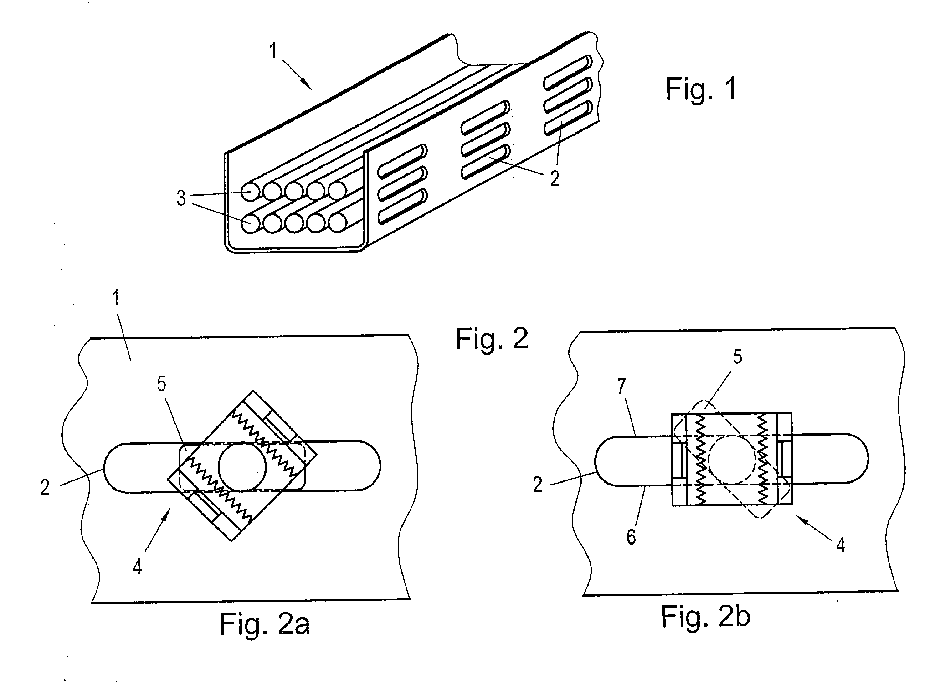

In Fig. 1 ist schematisch eine Aufnahme in Form einer Kabeltasse 1 dargestellt, wobei eine Mehrzahl von Durchbrechungen 2 insbesondere in Form von Langlöchern angedeutet ist, welche im wesentlichen in Längsrichtung der Aufnahme bzw. Kabeltasse 1 und im wesentlichen parallel zueinander verlaufen. Wie in Fig. 1 angedeutet, ist bereits eine Vielzahl von Leitungen bzw. Kabeln 3 in dieser Kabeltasse angeordnet.

Zur Festlegung bzw. Anordnung von weiteren rohrartigen Elementen, wie beispielsweise Rohren, Leitungen oder dgl. ist ein Zugriff bzw. eine zusätzliche Anordnung derartiger rohrartiger Elemente in der Kabeltasse 1 oftmals nicht oder nur schwer möglich.

Es erfolgt daher eine Festlegung von Befestigungselementen für eine Verlegung weiterer rohrartiger Elemente unter Heranziehung der Aufnahme 1, beispielsweise in Form der bereits bestehenden bzw. verlegten Kabeltasse, oder eines ähnlichen, mit insbesondere einer Mehrzahl von Durchbrechungen versehenen Aufnahmeelements, wie beispielsweise einer bestehenden Lochwand.

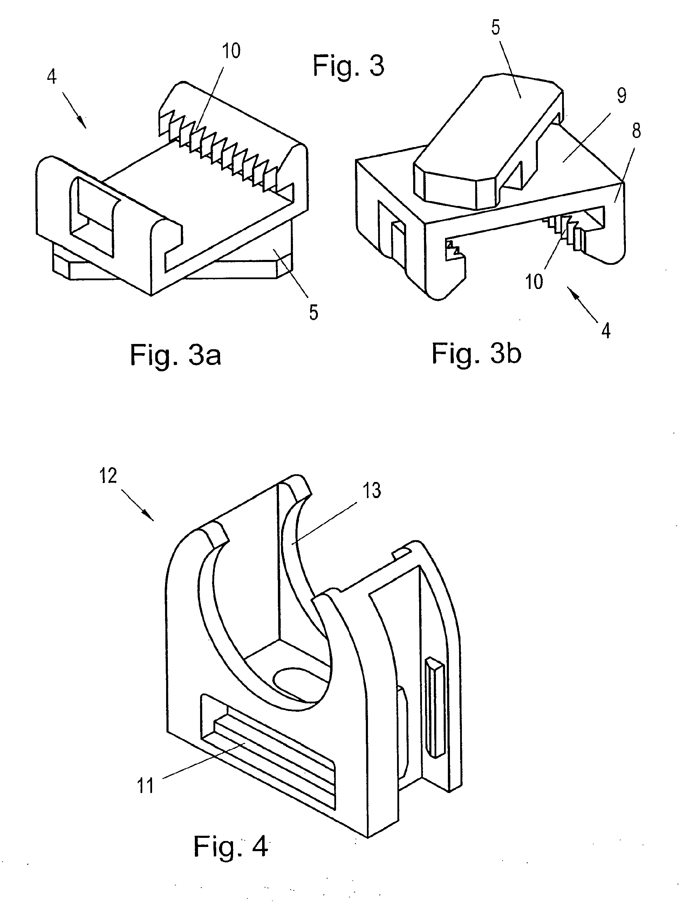

Für eine einfache Festlegung an der Außenseite der mit den Durchbrechungen, insbesondere Langlöchern 2 versehenen Wand der Aufnahme bzw. Kabeltasse 1 ist in Fig. 1 schematisch dargestellt, daß ein in Fig. 3 im Detail dargestelltes Zwischenstück 4 mit einem Fußelement 5 an der Aufnahme 1 in der Durchbrechung 2 festgelegt wird.

Entsprechend der Darstellung gemäß Fig. 2a wird das Fußelement 5 in eine Lage gebracht, in welcher das Fußelement 5 durch die Durchbrechung 2 der Aufnahme 1 hindurchtritt, wonach nach einem Verdrehen bzw. Verschwenken in die in Fig. 2b gezeigte Lage das Fußelement 5 Rand- bzw. Kantenbereiche 6 der Durchbrechung 2 übergreift, so daß eine zuverlässige Festlegung des Zwischenstücks 4 an der wiederum mit 1 bezeichneten Aufnahme in einer von einem Langloch 2 gebildeten Durchbrechung erzielbar ist.

Der Verdrehwinkel zur Festlegung des Zwischenstücks 4 an der Aufnahme 1 ist beispielsweise in Fig. 2a und 2b mit 45° angedeutet, wobei dieser Winkel darüber hinaus dem Winkel entspricht, um welchen das Fußelement 5 relativ zum Grundkörper 8 des Zwischenstücks 4 versetzt ist, um nach einem Verschwenken in die in Fig. 2b dargestellte Lage bzw. Einsatzlage zu gelangen.

Am Grundkörper 8, welcher eine im festgelegten Zustand auf der Aufnahme 1 aufliegende Auflagefläche 9 aufweist, sind an der vom Fußelement 5 abgewandten Seite hakenartige Vorsprünge 10 vorgesehen, welche mit entsprechenden Profilierungen 11 eines in Fig. 4 dargestellten Befestigungselements 12 zusammenwirken. Es läßt sich somit das Befestigungselement 12 in einfacher Weise durch ein Verrasten der hakenartigen Vorsprünge 10 mit den Profilierungen 11 an der Aufnahme 1 festlegen, wobei das Befestigungselement 12 darüber hinaus ein von einer Schelle 13 gebildetes Aufnahmeelement für eine nicht näher dargestellte Leitung bzw. für ein Rohr aufweist.

Durch Anordnung einer Vielzahl von derartigen Befestigungselementen 12 entlang der Längserstreckung der in Fig. 1 dargestellten Kabeltasse 1 läßt sich somit eine zuverlässige und einfache Festlegung eines sich gegebenenfalls über eine große Länge erstreckenden rohrartigen Elements erzielen.

Zur Erzielung einer Einstellbarkeit der Position sind das Fußelement 5 und Zwischenstück 4 verstellbar bzw. verschiebbar in der Durchbrechung 2 der Aufnahme 1. Weiters läßt sich durch die Verschiebbarkeit im wesentlichen unabhängig von der Ausbildung der Aufnahme 1 sowie insbesondere der Anordnung einzelner Durchbrechungen 2 mit einer einzigen Ausbildung von Fußelement 5 und Zwischenstück 4 das Auslangen finden, sodaß insbesondere auf aufeinander abgestimmte Konturen bzw. Ausbildungen der Aufnahme 1 und des daran festzulegenden Befestigungselements 12 und insbesondere des Fußelements 5 sowie Zwischenstücks 4 verzichtet werden kann.

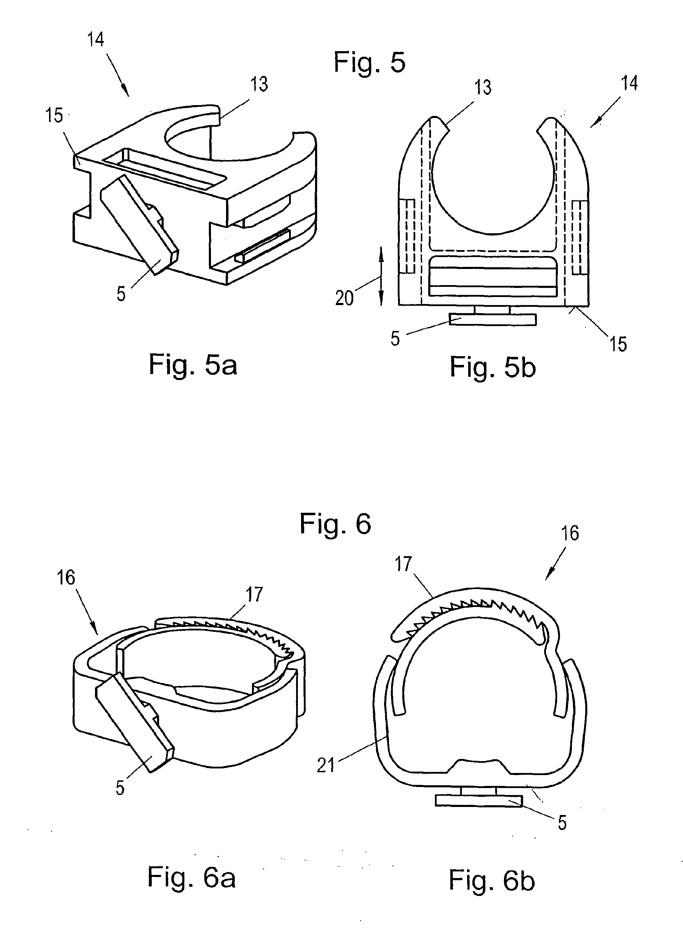

Bei der in Fig. 5 dargestellten abgewandelten Ausführungsform eines Befestigungselements 14 ist ersichtlich, daß das wiederum mit 5 bezeichnete Fußelement unmittelbar an der Auflagefläche 15 des Befestigungselements 14 vorgesehen ist, so daß anstelle der in den vorangehenden Fig. 2 bis 4 dargestellten Ausführungsform, bei welcher ein Zwischenstück 4 mit dem Fußelement 5 getrennt von dem Befestigungselement 12 zur Verfügung gestellt wird, unmittelbar das Befestigungselement 14 mit dem für eine Festlegung an der Aufnahme 1 in einer Durchbrechung 2 desselben erforderlichen Fußelement 5 ausgebildet ist.

Ähnlich wie bei der vorangehenden Ausführungsform erfolgt eine sichere Festlegung wiederum durch Einsetzen des Fußelements 5 in die Durchbrechung 2, wonach nach einem Verschwenken entsprechend dem in Fig. 5a ersichtlichen Winkel des Fußelements 5 relativ zum Befestigungselement 14 wiederum unmittelbar eine sichere Festlegung desselben erzielbar ist.

Ähnlich wie bei der vorangehenden Ausführungsform ist das Befestigungselement 14 mit einer Aufnahme in Form einer Schelle 13 versehen, wie dies auch aus Fig. 5b deutlich ersichtlich ist.

In Fig. 5b ist darüber hinaus ersichtlich, daß das Fußelement 5 im wesentlichen parallel zu der Auflagefläche 15 des Befestigungselements 14 verläuft, wobei, wie auch bei der vorangehenden Ausführungsform unter Verwendung des Zwischenstücks 4, das Fußelement 5 entsprechend der Dicke der Aufnahme 1 im Bereich der Durchbrechung 2 von der Auflagefläche 15 beabstandet ist, so daß ein unmittelbares Festlegen des Befestigungselements 14 durch Klemmen im Bereich der durch das Fußelement 5 übergriffenen Rand- bzw. Kantenbereiche der Durchbrechung 2 erzielbar ist.

Gewünschtenfalls könnte der Abstand des Fußelements 5 von der Auflagefläche 15 beispielsweise durch Vorsehen einer schraubenartigen Verbindung verstellbar sein, um derart eine gesicherte Festlegung an gegebenenfalls unterschiedliche Dicken aufweisende Aufnahmen 1 zu ermöglichen. Eine derartige Verstellbarkeit ist in Fig. 5b durch einen Doppelpfeil 20 angedeutet.

In Fig. 6 ist eine weitere abgewandelte Ausführungsform eines Befestigungselements 16 dargestellt, wobei wiederum unmittelbar das Fußelement 5 an dem Befestigungselement 16 festgelegt bzw. angelenkt ist, so daß ein Zwischenstück, wie dies in Fig. 2 und 3 angedeutet ist, nicht erforderlich ist.

Abweichend von der beispielsweise in Fig. 5 dargestellten Ausführungsform ist das Befestigungselement 16 im Bereich des Aufnahmeelements 21 mit einer zusätzlichen Verschlußeinrichtung 17 für ein verschließbares und gesichertes Festlegen eines nicht näher dargestellten rohrartigen Elements versehen.

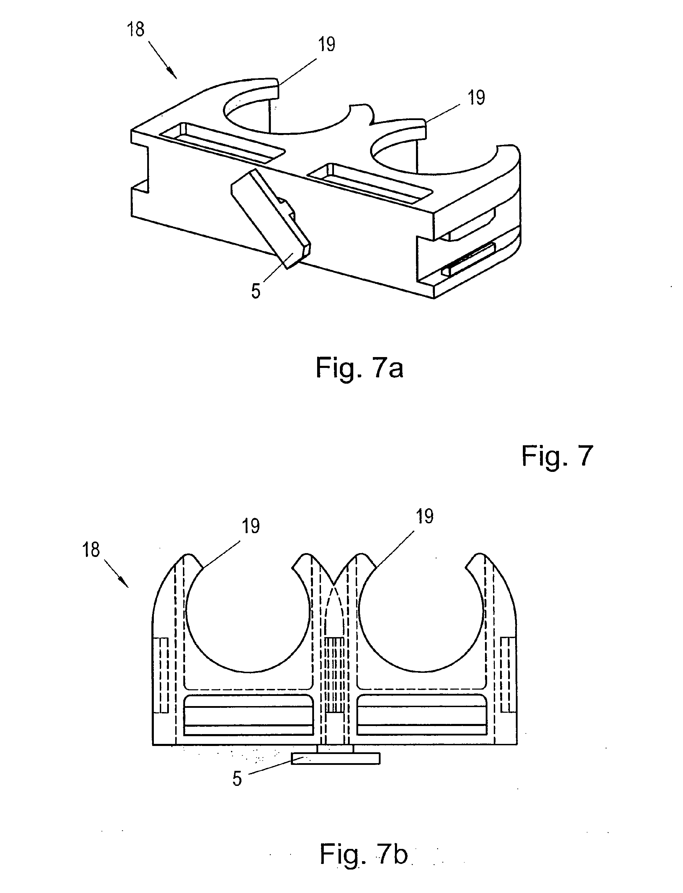

In Fig. 7 ist eine weitere abgewandelte Ausführungsform eines Befestigungselements 18 dargestellt, welche ähnlich wie die Ausführungsformen gemäß Fig. 5 und 6 ebenfalls unmittelbar mit dem Fußelement 5 für ein Übergreifen von Randbereichen der Durchbrechung der Aufnahme 1 versehen ist.

Wie in Fig. 7 ersichtlich, ist hiebei eine Mehrzahl von von Schellen gebildeten Aufnahmeelementen 19 nebeneinander angeordnet.

Anstelle der in Fig. 7 dargestellten Ausführungsform mit zwei nebeneinander angeordneten Schellen bzw. Aufnahmeelementen 19 kann selbstverständlich auch eine entsprechend größere Anzahl von nebeneinander angeordneten Aufnahmeelementen 19 vorgesehen sein.

Darüber hinaus ist ersichtlich, daß beispielsweise bei Festlegung eines Befestigungselements oder Zwischenstücks über das Fußelement 5 in einer von einem Langloch 2 gebildeten Durchbrechung die Länge des Fußelements 5 die Breite, welche im wesentlichen der Durchtrittsbreite des Langlochs 2 entspricht, beispielsweise um das Doppelte bzw. das Dreifache überragt.

Bei Vorsehen von Durchbrechungen 2 mit einer von einem Langloch abweichenden Gestalt, können entsprechend angepaßt ausgebildete Fußelemente 5 Verwendung finden, wobei wiederum sicherzustellen ist, daß nach einem Durchtreten eines derartigen Fußelements 5 durch die Durchbrechung 2 durch ein Verdrehen bzw. Verschwenken des Fußelements 5 ein Übergreifen von Rand- bzw. Kantenbereichen 6, 7 der Durchbrechung 2 für eine einfache und unmittelbare sowie sichere Festlegung erfolgt. Auch bei diesen zusätzlichen Ausbildungen wird durch eine Verstellbarkeit bzw. Verschiebbarkeit eine Anpassung an unterschiedliche Gegebenheiten und eine Positionierung an unterschiedlichen Stellen möglich. Weiters wird der Einsatz von im wesentlichen unveränderten Fußelementen 5 insbesondere unabhängig von einer gegebenenfalls unterschiedlichen Ausbildung von Aufnahmen 1 und/oder Durchbrechungen 2 möglich.

Für eine besonders einfache Herstellung und zur Erzielung einer für eine insbesondere klemmende Festlegung gewünschten Flexibilität wird bzw. werden das Befestigungselement 12, 14, 16, 18 und/oder das Zwischenstück 4 beispielsweise aus einem Kunststoffmaterial hergestellt.

## Patentansprüche

1. Verfahren zum Festlegen eines Befestigungselements für ein rohrartiges Element, insbesondere für ein Rohr, eine Leitung oder dgl. an einer mit wenigstens einer Durchbrechung (2), insbesondere einem Langloch ausgebildeten Aufnahme (1), beispielsweise einer Kabeltasse, umfassend die folgenden Schritte:
- Bereitstellen eines Befestigungselements (12, 14, 16, 18), welches mit einem Fußelement (5) versehen wird, welchem ein Durchtritt durch die Durchbrechung (2) ermöglicht wird, wobei das eine bevorzugte Längserstreckungsrichtung aufweisende Fußelement (5) an dem Befestigungselement (14, 16, 18) oder an einem mit diesem koppelbaren Zwischenstück (4) beabstandet von einer Auflagefläche (9, 15) des Befestigungselements (14, 16, 18) oder Zwischenstücks (4) an der Aufnahme (1) ausgebildet wird,
- Einsetzen des Fußelements (5) in der Durchbrechung (2) der Aufnahme (1), und
- Verdrehen bzw. Verschwenken des Befestigungselements (14, 16, 18) oder Zwischenstücks (4) nach Durchtritt des Fußelements (5) durch die Durchbrechung (2) in eine Lage, in welcher das Fußelement (5) Rand- bzw. Begrenzungsbereiche (6, 7) der Durchbrechung (2) übergreift,
**dadurch gekennzeichnet, daß** das Befestigungselement (12, 14, 16, 18) oder Zwischenstück (4) mit dem eingesetzten Fußelement (5) in der Durchbrechung (2) verstellbar bzw. verschiebbar angeordnet wird.

2. Verfahren nach Anspruch 1, **dadurch gekennzeichnet, daß** der Verdrehwinkel zum Übergreifen der Rand- bzw. Begrenzungsbereiche (6, 7) der Durchbrechung (2) durch das Fußelement (5) und zur Einnahme einer Einsatzposition des Befestigungselements (12, 14, 16, 18) mit wenigstens 20°, vorzugsweise etwa 45° gewählt wird.

3. Verfahren nach Anspruch 1 oder 2, **dadurch gekennzeichnet, daß** der Abstand des Fußelements (5) von einer Auflagefläche (9, 15) des Befestigungselements (14, 16, 18) oder Zwischenstücks (4) entsprechend der Dicke der Aufnahme (1) im Bereich der Durchbrechung (2) gewählt wird.

4. Verfahren nach einem der Ansprüche 1 bis 3, **dadurch gekennzeichnet, daß** das Befestigungselement (12, 14, 16, 18) oder das damit koppelbare Zwischenstück (4) mit dem daran angeordneten Fußelement (5) aus einem Kunststoffmaterial hergestellt wird.

5. Befestigungselement für ein rohrartiges Element, insbesondere für ein Rohr, eine Leitung oder dgl., zur Festlegung an einer mit wenigstens einer Durchbrechung, insbesondere einem Langloch ausgebildeten Aufnahme, beispielsweise einer Kabeltasse, wobei das Befestigungselement (14, 16, 18) oder ein damit koppelbares Zwischenstück (4) mit einem Fußelement (5) versehen ist, welchem ein Durchtritt durch die Durchbrechung (2) ermöglicht ist, wobei das eine bevorzugte Längserstreckungsrichtung aufweisende Fußelement (5) an dem Befestigungselement (14, 16, 18) oder an einem mit diesem koppelbaren Zwischenstück (4) beabstandet von einer Auflagefläche (9, 15) des Befestigungselements (14, 16, 18) oder Zwischenstücks (4) an der Aufnahme (1) ausgebildet ist und nach einem Durchtritt durch die Durchbrechung (2) für ein Zusammenwirken mit Rand- bzw. Kantenbereichen (6, 7) der Durchbrechung (2) gemeinsam mit dem Befestigungselement (14, 16, 18) oder Zwischenstück (4) verdrehbar bzw. verschwenkbar ist, **dadurch gekennzeichnet, daß** das Befestigungselement (12, 14, 16, 18) oder Zwischenstück (4) mit dem eingesetzten Fußelement (5) in der Durchbrechung (2) verstellbar bzw. verschiebbar angeordnet ist.

6. Befestigungselement nach Anspruch 5, **dadurch gekennzeichnet, daß** der Verdrehwinkel zum Übergreifen der Rand- bzw. Begrenzungsbereiche (6, 7) der Durchbrechung (2) durch das Fußelement (5) und zur Einnahme einer Einsatzposition des Befestigungselements (12, 14, 16, 18) mit wenigstens 20°, vorzugsweise etwa 45° gewählt ist.

7. Befestigungselement nach Anspruch 5 oder 6, **dadurch gekennzeichnet, daß** der Abstand des Fußelements (5) von einer Auflagefläche (9, 15) des Befestigungselements (14, 16, 18) oder Zwischenstücks (4) entsprechend der Dicke der Aufnahme (1) im Bereich der Durchbrechung (2) gewählt ist.

8. Befestigungselement nach Anspruch 5, 6 oder 7, **dadurch gekennzeichnet, daß** das Befestigungselement (12, 14, 16, 18) oder das damit koppelbare Zwischenstück (4) mit dem daran angeordneten Fußelement (5) aus einem Kunststoffmaterial hergestellt ist.

9. Befestigungselement nach einem der Ansprüche 5 bis 8, **dadurch gekennzeichnet, daß** die Längserstreckung des Fußelements (5) wenigstens das Doppelte, insbesondere wenigstens das Dreifache der Breite des Fußelements (5) beträgt.

10. Befestigungselement nach einem der Ansprüche 5 bis 9, **dadurch gekennzeichnet, daß** das Zwischenstück (4) mit hakenartigen Vorsprüngen (10) an der vom Fußelement (5) abgewandten Oberfläche ausgebildet ist, welche mit komplementär ausgebildeten Profilierungen (11) im zur Aufnahme gewandten Bodenbereich des Befestigungselements (12) für eine Festlegung des Befestigungselements (12) an dem Zwischenstück (4) zusammenwirken.

11. Befestigungselement nach einem der Ansprüche 5 bis 10, **dadurch gekennzeichnet, daß** ein Aufnahmeelement (13, 19, 21) zur Aufnahme des rohrartigen Elements von einer das rohrartige Element wenigstens teilweise umgreifenden Schelle gebildet ist.

12. Befestigungselement nach einem der Ansprüche 5 bis 11, **dadurch gekennzeichnet, daß** eine Mehrzahl von Aufnahmeelementen (19) im wesentlichen nebeneinander und parallel zueinander angeordnet ist.

13. Befestigungselement nach einem der Ansprüche 5 bis 12, **dadurch gekennzeichnet, daß** ein Aufnahmeelement (21) mit einer insbesondere lösbaren Verschlußeinrichtung (17) für das aufzunehmende rohrartige Element ausgebildet ist.
